# EUROPÄISCHE PATENTANMELDUNG

(11) **EP 3 945 663 A1**
(43) Veröffentlichungstag der Anmeldung: **02.02.2022**
(21) Anmeldenummer: 20187946.7
(22) Anmeldetag: 27.07.2020
(51) Int. Cl.: H02K 11/33, H02K 21/16, H02K 1/14, H02K 5/04, H02K 5/22

(54) **AKTIVTEILEINHEIT, ANBAUMODUL UND DYNAMOELEKTRISCHE ROTATORISCHE MASCHINE**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betrifft eine Aktivteileinheit (16) für eine dynamoelektrische rotatorische Maschine (13), aufweisend ein Basisaktivteil (2) und wenigstens ein abnehmbares Anbaumodul (3), wobei das Basisaktivteil (2) aufweist: ein Basisrotorpaket (8), ein Basisstatorpaket (9) mit einer dreiphasigen oder mehrphasigen Wicklung, wenigstens eine Schnittstelle zur mechanischen und/oder elektrischen Kontaktierung des Anbaumoduls; wobei das Anbaumodul (3) aufweist: wenigstens eine basisaktivteilseitige Schnittstelle (6) zur mechanischen und/oder elektrischen Kontaktierung des Basisaktivteils (2), wenigstens eine spannungsquellenseitige Schnittstelle (7) zur elektrischen Kontaktierung einer Spannungsquelle; wobei das Anbaumodul (3) dergestalt ist, dass eine Versorgungsspannung der Spannungsquelle in eine dreiphasige oder mehrphasige Wechselspannung zur Speisung der dreiphasigen oder mehrphasigen Wicklung des Basisaktivteils (2) gewandelt wird oder dass die Versorgungsspannung durchgeleitet wird. Die Erfindung betrifft zudem ein Anbaumodul (3), anbringbar an ein Basisaktivteil (2) zur Bildung einer Aktivteileinheit (16) sowie eine dynamoelektrische rotatorische Maschine (13).

## Beschreibung

Die Erfindung betrifft eine Aktivteileinheit für eine dynamoelektrische rotatorische Maschine, ein Anbaumodul sowie eine dynamoelektrische rotatorische Maschine.

Dynamoelektrische rotatorische Maschinen werden an verschiedenen Versorgungsnetzen betrieben. Hierzu zählen mitunter zweiphasige Wechselspannungsnetze, dreiphasige Wechselspannungsnetze und Gleichspannungsnetze.

Um die Maschine mit elektrischer Energie zu versorgen, ist jedoch ein auf das jeweilige Versorgungsnetz gerichtete Maschinendesign nötig.

Der Erfindung liegt die Aufgabe zugrunde, eine dynamoelektrische rotatorische Maschine flexibel an verschiedenen Netzen zu betreiben.

Die Lösung der Aufgabe gelingt durch Anspruch 1, d. h. eine Aktivteileinheit für eine dynamoelektrische rotatorische Maschine, aufweisend ein Basisaktivteil und wenigstens ein abnehmbares Anbaumodul,
wobei das Basisaktivteil aufweist:
- ein Basisrotorpaket,
- ein Basisstatorpaket mit einer dreiphasigen oder mehrphasigen Wicklung,
- wenigstens eine Schnittstelle zur mechanischen und/oder elektrischen Kontaktierung des Anbaumoduls,
wobei das Anbaumodul aufweist:
- wenigstens eine basisaktivteilseitige Schnittstelle zur mechanischen und/oder elektrischen Kontaktierung des Basisaktivteils,
- wenigstens eine spannungsquellenseitige Schnittstelle zur elektrischen Kontaktierung einer Spannungsquelle,
wobei das Anbaumodul dergestalt ist, dass eine Versorgungsspannung der Spannungsquelle in eine dreiphasige oder mehrphasige Wechselspannung zur Speisung der dreiphasigen oder mehrphasigen Wicklung des Basisaktivteils gewandelt wird oder dass die Versorgungsspannung durchgeleitet wird.

In einer vorteilhaften Ausführung wandelt das Anbaumodul die Versorgungsspannung mechanisch und/oder elektronisch in die dreiphasige oder mehrphasige Wechselspannung.

Mehrphasig bedeutet z. B. fünfphasig. Es sind jedoch auch andere Phasenarten denkbar.

In einer vorteilhaften Ausführung ist das Anbaumodul derart ausgebildet, dass eine zweiphasige Wechselversorgungsspannung und/oder eine dreiphasige Wechselversorgungsspannung und/oder eine Versorgungsgleichspannung in die dreiphasige oder mehrphasige Wechselspannung gewandelt wird.

In einer vorteilhaften Ausführung weist das Anbaumodul einen Lagesensor zur Erfassung einer Rotorlage auf.

In einer vorteilhaften Ausführung weist das Anbaumodul einen dezentralen Umrichter zur Wandlung der Versorgungsspannung in die dreiphasige oder mehrphasige Wechselspannung auf.

Die Lösung der oben gestellten Aufgabe gelingt ferner durch Anspruch 6, d. h. ein Anbaumodul, anbringbar an ein Basisaktivteil zur Bildung einer Aktivteileinheit, wobei das Anbaumodul aufweist:
- wenigstens eine basisaktivteilseitige Schnittstelle zur mechanischen und/oder elektrischen Kontaktierung des Basisaktivteils,
- wenigstens eine spannungsquellenseitige Schnittstelle zur elektrischen Kontaktierung einer Spannungsquelle,
wobei das Anbaumodul dergestalt ist, dass eine Versorgungsspannung der Spannungsquelle in eine dreiphasige oder mehrphasige Wechselspannung zur Speisung der dreiphasigen oder mehrphasigen Wicklung des Basisaktivteils gewandelt wird oder dass die Versorgungsspannung durchgeleitet wird.

Das Anbaumodul ist vorzugsweise derart ausgeführt, dass über eine Kontaktstelle wird das Anbaumodul mit Spannung versorgt wird. Dies gelingt vorteilhaft mittels der spannungsquellenseitigen Schnittstelle.

Innerhalb des Anbaumoduls wird die Spannung vorteilhaft derart geschaltet, dass in dem Basisaktivteil eine gewünschte Zuordnung zwischen Luftspaltfeld und Rotorlage eingestellt wird. Dies gelingt z. B. mittels elektronischer Schalter und/oder mittels mechanischer Schalter und/oder mittels Bürsten und/oder mittels Kommutatoren.

Das Anbaumodul erzeugt vorteilhaft die für den Betrieb des Basisaktivteils erforderliche Spannung, insbesondere eine dreisträngige oder mehrsträngige Spannung, bzw. den erforderlichen Strom.

Spannung bzw. Strom werden vorzugsweise über die Kontaktstelle des Anbaumoduls an das Basisaktivteil geleitet.

Eine richtige Zuordnung einer Speisespannung zum Basisaktivteil wird z. B. durch eine definierte Stellung des Basisaktivteils zu dem Abschnitt des Anbaumoduls, der für eine Kontaktierung mit dem Statorpaket des Basisaktivteils vorgesehen ist, ermöglicht. Eine richtige Zuordnung einer Speisespannung zum Basisaktivteil wird z. B. durch eine definierte Stellung des Basisaktivteils zu dem Abschnitt des Anbaumoduls, der für eine Kontaktierung mit dem Rotorpaket des Basisaktivteils vorgesehen ist, ermöglicht. Vorzugsweise werden hierzu mechanisch eindeutige Anbauzuordnungen festgelegt.

Die Lösung der Aufgabe gelingt überdies durch Anspruch 7, d. h. eine dynamoelektrische rotatorische Maschine, aufweisend eine Aktivteileinheit.

Die Erfindung bietet den Vorteil, dass das Basisaktivteil in hoher Stückzahl und somit kostengünstig gefertigt werden kann. Eine Varianz wird durch unterschiedliche Anbaumodule erzeugt.

In einer vorteilhaften Ausführung weist die Maschine ein Statorpaket mit einer in Nuten gelegten Wicklung, insbesondere Kupferspulenwicklung, auf.

Es sind jedoch auch andere Wicklungen denkbar. Es eignet sich z. B. auch eine Aluminiumwicklung.

In einer vorteilhaften Ausführung weist das Statorpaket eine dreiphasige oder mehrphasige Zahnspulenwicklung auf, wobei pro Nut wenigstens eine Windung einer Phase angeordnet ist.

Dies ist von Vorteil, da keine Isolierung zweier Phasen gegeneinander nötig ist und somit kein Bauraum verloren geht. Eine große Leitungsfläche pro Nut bringt hohe Leistung mit sich.

In einer vorteilhaften Ausführung ist pro Nut wenigstens eine Windung genau einer Phase angeordnet.

In einer vorteilhaften Ausführung ist die Wicklung derart ausgebildet, dass eine Nutzwelle wenigstens im Wesentlichen einem Zweifachen einer Grundwelle entspricht.

Somit kann die Zahnspulentechnik verwendet werden, mittels der eine einfache Isolierung möglich ist und zudem ein guter Wicklungsfaktor erreicht werden kann, der 0,86 übersteigt. Es ist ein Wicklungsfaktor von 1 möglich. Dies bietet den Vorteil, dass ein hohes Drehmoment erreicht wird, da bei einem Wicklungsfaktor von 1 100% des Feldes genutz werden können.

In einer vorteilhaften Ausführung weist die Wicklung einen Wicklungsfaktor f für die Nutzwelle zwischen 0,9 und 1 auf.

Dieser hohe Wicklungsfaktor der Wicklung für die Nutzwelle sorgt einerseits für eine hohe Leistungs- und Drehmomentdichte und andererseits für geringe Drehmomentschwankungen beim Betrieb mit Gleichspannung bzw. gleichgerichteter Spannung.

In einer vorteilhaften Ausführung weist das Statorpaket eine erste Zahnteilung und eine von der ersten Zahnteilung verschiedene zweite Zahnteilung auf.

Dies ist von Vorteil, da eine Zahnart umwickelt wird und die andere Zahnart eine Nut teilt. So kann ein Wicklungsfaktor von 1 erreicht werden.

In einer weiteren vorteilhaften Ausführung weist die Maschine eine Rotorpolpaarzahl p und einen Polteilungswinkel αₚₜ auf, wobei für die erste Zahnteilung α_{zs} = (2·i·1)·f· αₚₜ gilt, wobei 0,9≤f≤1 gilt, wobei i={1, 2, 3,...} gilt.

In einer vorteilhaften Ausführung entspricht die zweite Zahnteilung α_{zb} wenigstens im Wesentlichen dem Polteilungswinkel αₚₜ.

Ein ähnlicher oder gleicher Winkel der Polteilung des Rotors und der Zahnteilung des Stators hat den Vorteil, dass, insbesondere bei einer gleichen Phasenlage der einzelnen Spulen einer Phase, ein Wicklungsfaktor von 1, also 100%, erreicht werden kann.

Die Erfindung bietet ferner den Vorteil, dass als Ersatz für Asynchronmaschinen hoch effiziente Synchronmaschinen am Wechselspannungsnetz betrieben werden können.

Dies bietet den Vorteil, dass Verluste, insbesondere Rotorverluste, reduziert werden.

Im Gegensatz zu Asynchronmaschinen bieten Synchronmaschinen den Vorteil, dass der Rotor nicht sehr stark erwärmt wird. Zudem ist ein Verschleiß von Bauteilen geringer.

Besonders gut eignet sich die Erfindung für eine permanenterregte Synchronmaschine oder eine Reluktanzmaschine. Ferner ist auch eine Reluktanzmaschine denkbar, die mittels, vorzugsweise innenliegender, Permanentmagnete ein zusätzliches Drehmoment bereitstellt.

Auf diese Weise sind auch neue Wirkungsgradklassen erreichbar.

Im Folgenden wird die Erfindung anhand der in den Figuren dargestellten Ausführungsbeispiele näher beschrieben und erläutert. Es zeigen:
- FIG 1: eine dynamoelektrische rotatorische Maschine,
- FIG 2: ein Einzelblech für ein Basisstatorpaket,
- FIG 3: ein am Basisaktivteil angebrachtes Anbaumodul im Detail.

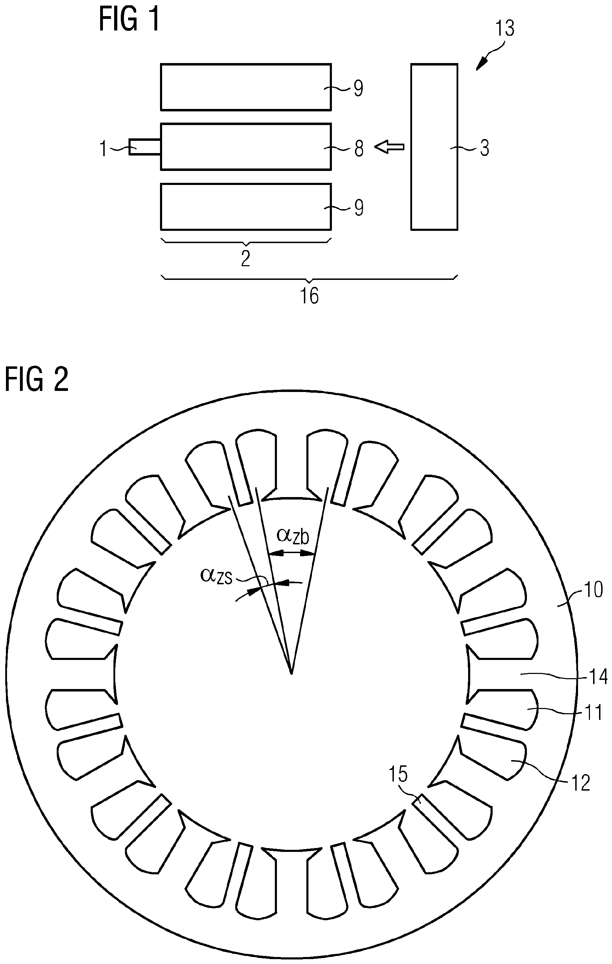

FIG 1 zeigt eine dynamoelektrische rotatorische Maschine 13. Die Maschine 13 weist ein Basisaktivteil 2 auf, umfassend ein Basisstatorpaket 9, eine Basisrotorpaket 8 und eine Welle 1.

Das Basisrotorpaket 8 weist beispielsweise Magnetpole aus gewickelten Magnetspulen auf und ist beispielsweise elektrisch erregt. Ferner kann die Rotoreinheit auch mit Permanentmagneten bestückt sein (Permanenterregung). Es ist überdies möglich, einen Reluktanzrotor auszubilden, bei welchem die Pole durch eine weichmagnetische Anisotropie gebildet sind.

Die Figur zeigt, dass ein Anbaumodul 3 an das Basisaktivteil 2 angebracht wird. Auf diese Weise wird eine Aktivteileinheit 16 gebildet.

FIG 2 zeigt ein Einzelblech 10 für ein Basisstatorpaket 9.

Das Einzelblech 10 weist einen ersten Zahn (schmal) 15 auf sowie einen zweiten Zahn 14. Die Figur zeigt, dass eine Kontur des ersten Zahns 15 schmaler ausgebildet ist als eine Kontur des zweiten Zahns 14.

Zwischen dem ersten Zahn 15 und dem zweiten Zahn 14 ist eine Nut 11 ausgebildet, zwischen dem zweiten Zahn 14 und dem ersten Zahn 15 ist eine Nut 12 ausgebildet.

Die Figur zeigt ferner eine erste Zahnteilung des Statorpakets α_{zs} und eine zweite Zahnteilung des Statorpakets α_{zb}.

Wie die Figur zeigt, weist das Statorpaket zwei unterschiedliche Zahnteilungen auf.

Vorzugsweise ist eine Zahnteilung für einen umwickelten Zahn, insbesondere in Gestalt des zweiten Zahns 14, breiter als eine Zahnteilung für einen Zwischenzahn, insbesondere in Gestalt des ersten Zahns 15. Dies ist in der Figur gezeigt.

Die in FIG 1 beschriebene dynamoelektrische rotatorische Maschine 13 weist eine Rotorpolpaarzahl p und einen Polteilungswinkel αₚₜ auf (nicht dargestellt) wobei für die erste Zahnteilung gilt:
α _{zs} = (2·i·1)·f· αₚₜ, wobei 0,9 ≤ f ≤ 1 gilt, wobei i = {1, 2, 3,...} gilt.

Durch eine Aneinanderreihung einer Mehrzahl an derartigen Einzelblechen 10 gelingt die Fertigung des Basisstatorpakets 9.

Das mittels dieser Einzelbleche 10 gefertigte Basisstatorpaket weist vorteilhaft eine in Nuten gelegte Kupferspulenwicklung auf. Diese Kupferspulenwicklung ist vorzugsweise eine dreiphasige Zahnspulenwicklung, wobei sich nur die Windungen einer Phase in einer Nut befinden.

In einer bevorzugten Ausführung ist das Wicklungssystem so aufgebaut, dass eine Nutzwelle einer zweifachen Grundwelle entspricht.

Bevorzugt weist ein Wicklungsfaktor für die Nutzwelle einen Wert zwischen 0,9 und 1 auf.

Das Einzelblech 10 ist vorzugsweise aus einem Elektrogroßblech gestanzt. Vorteilhaft weist das Einzelblech 10 eine Dicke von kleiner als 200 µm auf. Eine Dicke des Einzelblechs 10 liegt vorzugsweise zwischen 10 und 200 µm. Jedoch sind auch dünnere und dickere Einzelbleche denkbar.

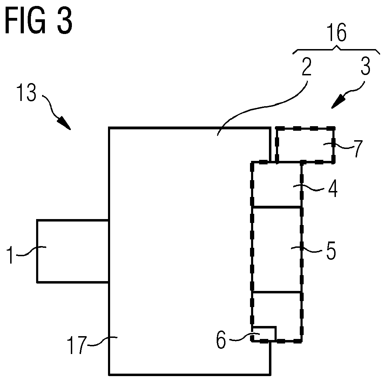

FIG 3 zeigt das am Basisaktivteil 2 angebrachte Anbaumodul 3 im Detail.

Das abnehmbare Anbaumodul 3 weist in der Figur eine spannungsquellenseitige Schnittstelle 7 zur elektrischen Kontaktierung einer Spannungsquelle auf. Die elektrische Kontaktierung gelingt beispielsweise mittels Bürsten und/oder Schleifringen und/oder Kontaktpolen.

Das Anbaumodul 3 umfasst ferner eine basisaktivteilseitige Schnittstelle 6 zur mechanischen und/oder elektrischen Kontaktierung des Rotorbasisaktivteils 2.

Eine mechanische Verbindung des Basisaktivteils 2 und des Anbaumoduls 3 ist vorzugsweise form- und/oder kraftschlüssig.

Es eignen sich mitunter eine Steckverbindungen, Schraubverbindungen oder auch Karabinerverschlüsse.

Die in der Figur gezeigten Schnittstellen 6 und 7 dienen vorteilhaft einer elektrischen Kontaktierung. Die Schnittstellen 4 und 5 dienen vorteilhaft einer mechanischen Kontaktierung.

Das Anbaumodul 3 ist an das Basisaktivteil 2 anbringbar und wieder abnehmbar.

Das Anbaumodul 3 ist dergestalt, dass eine Versorgungsspannung einer Spannungsquelle in eine dreiphasige Wechselspannung zur Speisung einer dreiphasigen Wicklung des Basisaktivteils 2 gewandelt wird.

Dies bietet den Vorteil, dass das Basisaktivteil 2 in hoher Stückzahl und somit günstig gefertigt werden kann. Eine Varianz der Maschine 13 wird durch unterschiedliche Anbaumodule erzeugt.

Das Anbaumodul 3 ist vorteilhaft derart ausgebildet, dass eine zweiphasige Wechselversorgungsspannung und/oder eine dreiphasige Wechselversorgungsspannung und/oder eine Versorgungsgleichspannung in die dreiphasige Wechselspannung umgewandelt wird. Das Anbaumodul 3 wandelt die Versorgungsspannung hierzu mechanisch und/oder elektronisch in die dreiphasige Wechselspannung für die Rotoreinheit 8. Das Anbaumodul 3 weist beispielsweise hierzu einen dezentralen Umrichter auf.

Dies bietet den Vorteil, dass die Aktivteileinheit 16 flexibel an verschiedenen Netzen betreibbar ist.

Das Anbaumodul 3 kann überdies einen Lagesensor zur Erfassung einer Rotorlage aufweisen.

Die in der Figur gezeigte Maschine 13 weist ein Gehäuse 17 auf.

Der Aufbau der Maschine 13 in der beschriebenen Modulbauweise ermöglicht eine Anpassung eines Betriebsverhaltens an Kundenapplikationen ohne den Basismotor, also das Basisaktivteil, verändern zu müssen.

## Patentansprüche

1. Aktivteileinheit (16) für eine dynamoelektrische rotatorische Maschine (13), aufweisend ein Basisaktivteil (2) und wenigstens ein abnehmbares Anbaumodul (3),
wobei das Basisaktivteil (2) aufweist:
- ein Basisrotorpaket (8),
- ein Basisstatorpaket (9) mit einer dreiphasigen oder mehrphasigen Wicklung,
- wenigstens eine Schnittstelle zur mechanischen und/oder elektrischen Kontaktierung des Anbaumoduls,
wobei das Anbaumodul (3) aufweist:
- wenigstens eine basisaktivteilseitige Schnittstelle (6) zur mechanischen und/oder elektrischen Kontaktierung des Basisaktivteils (2),
- wenigstens eine spannungsquellenseitige Schnittstelle (7) zur elektrischen Kontaktierung einer Spannungsquelle,
wobei das Anbaumodul (3) dergestalt ist, dass eine Versorgungsspannung der Spannungsquelle in eine dreiphasige oder mehrphasige Wechselspannung zur Speisung der dreiphasigen oder mehrphasigen Wicklung des Basisaktivteils (2) gewandelt wird oder dass die Versorgungsspannung durchgeleitet wird.

2. Aktivteileinheit (16) nach Anspruch 1, wobei das Anbaumodul (3) die Versorgungsspannung mechanisch und/oder elektronisch in die dreiphasige oder mehrphasige Wechselspannung wandelt.

3. Aktivteileinheit (16) nach einem der vorhergehenden Ansprüche, wobei das Anbaumodul (3) derart ausgebildet ist, dass eine zweiphasige Wechselversorgungsspannung und/oder eine dreiphasige Wechselversorgungsspannung und/oder eine Versorgungsgleichspannung in die dreiphasige oder mehrphasige Wechselspannung gewandelt wird.

4. Aktivteileinheit (16) nach einem der vorhergehenden Ansprüche, wobei das Anbaumodul (3) einen Lagesensor zur Erfassung einer Rotorlage aufweist.

5. Aktivteileinheit (16) nach einem der vorhergehenden Ansprüche, wobei das Anbaumodul (3) einen dezentralen Umrichter zur Wandlung der Versorgungsspannung in die dreiphasige oder mehrphasige Wechselspannung aufweist.

6. Anbaumodul (3), anbringbar an ein Basisaktivteil (2) zur Bildung einer Aktivteileinheit (16) nach einem der Ansprüche 1 bis 5, wobei das Anbaumodul (3) aufweist:
- wenigstens eine basisaktivteilseitige Schnittstelle (6) zur mechanischen und/oder elektrischen Kontaktierung des Basisaktivteils,
- wenigstens eine spannungsquellenseitige Schnittstelle (7) zur elektrischen Kontaktierung einer Spannungsquelle,
wobei das Anbaumodul (3) dergestalt ist, dass eine Versorgungsspannung der Spannungsquelle in eine dreiphasige oder mehrphasige Wechselspannung zur Speisung der dreiphasigen oder mehrphasigen Wicklung des Basisaktivteils (2) gewandelt wird oder dass die Versorgungsspannung durchgeleitet wird.

7. Dynamoelektrische rotatorische Maschine (13), aufweisend eine Aktivteileinheit (16) nach einem der Ansprüche 1 bis 5.

8. Dynamoelektrische rotatorische Maschine (13) nach Anspruch 7, aufweisend ein Basisstatorpaket (9) mit einer in Nuten (11, 12) gelegten Wicklung, insbesondere Kupferspulenwicklung.

9. Dynamoelektrische rotatorische Maschine (13) nach Anspruch 8, wobei das Basisstatorpaket (9) eine dreiphasige oder mehrphasige Zahnspulenwicklung aufweist, wobei pro Nut (11, 12) wenigstens eine Windung einer Phase angeordnet ist.

10. Dynamoelektrische rotatorische Maschine (13) nach Anspruch 9, wobei pro Nut (11, 12) wenigstens eine Windung genau einer Phase angeordnet ist.

11. Dynamoelektrische rotatorische Maschine (13) nach einem der Ansprüche 7 bis 10, wobei die Wicklung derart ausgebildet ist, dass eine Nutzwelle wenigstens im Wesentlichen einem Zweifachen einer Grundwelle entspricht.

12. Dynamoelektrische rotatorische Maschine (13) nach einem der Ansprüche 7 bis 11, wobei die Wicklung einen Wicklungsfaktor f für die Nutzwelle zwischen 0,9 und 1 aufweist.

13. Dynamoelektrische rotatorische Maschine (13) nach einem der Ansprüche 8 bis 12, wobei das Basisstatorpaket (9) eine erste Zahnteilung und eine von der ersten Zahnteilung (α_{zs}) verschiedene zweite Zahnteilung (α_{zb}) aufweist.

14. Dynamoelektrische rotatorische Maschine (13) nach Anspruch 13, aufweisend eine Rotorpolpaarzahl p und einen Polteilungswinkel αₚₜ, wobei für die erste Zahnteilung α_{zs} = (2·i·1)·f· αₚₜ gilt, wobei 0,9 ≤ f ≤ 1 gilt, wobei i = {1, 2, 3,...} gilt.

15. Dynamoelektrische rotatorische Maschine (13) nach einem der Ansprüche 13 oder 14, die zweite Zahnteilung α_{zb} wenigstens im Wesentlichen dem Polteilungswinkel αₚₜ entspricht.
